# EUROPÄISCHE PATENTSCHRIFT

(11) **EP 2 777 131 B1**
(45) Veröffentlichungstag und Bekanntmachung des Hinweises auf die Patenterteilung: **08.02.2017**
(21) Anmeldenummer: 12848724.6
(22) Anmeldetag: 09.11.2012
(51) Int. Cl.: H02J 9/06, H05B 41/392, H01J 7/44, H02J 9/00, H05B 37/02, H05B 39/04, H05B 41/46

(54) **BETRIEBSGERÄT MIT NOTLICHTBETRIEB**
OPERATING DEVICE WITH EMERGENCY LIGHTING MODE
ÉQUIPEMENT À MODE D'ÉCLAIRAGE DE SECOURS

(30) Priorität: 10.11.2011 DE 102011086067
(43) Veröffentlichungstag der Anmeldung: 17.09.2014
(73) Patentinhaber: Tridonic GmbH & Co. KG, 6851 Dornbirn (AT)
(72) Erfinder: NESENSOHN, Christian, A-6840 Götzis (AT)
(74) Vertreter: Rupp, Christian
(86) Internationale Anmeldenummer: PCT/AT2012/000286
(87) Internationale Veröffentlichungsnummer: WO 2013/067562

(56) Entgegenhaltungen:
- WO-A1-2007/121860
- DE-A1-102009 010 180
- DE-A1-102010 003 797
- US-A- 4 144 462

## Beschreibung

Die Erfindung betrifft allgemein das Gebiet der Betriebsgeräte für den Betrieb von Leuchtmitteln (z.B. Gasentladungslampen, Halogenlampen, LEDs, OLEDs) und insbesondere für den Betrieb von Leuchtmitteln im Notlichtbetrieb.

Ausgangspunkt der Erfindung sind Leuchtmittel, die im Normalbetrieb (bspw. bei Anliegen einer AC-Netzspannung am Betriebsgerät) mit geregeltem Strom betrieben werden. Die Stromregelung (Konstantstromregelung) hat den Vorteil, dass z.B. unterschiedliche Leuchtmittel mit gleichem Strom betrieben werden können. Bspw. können sich die unterschiedlichen Leuchtmittel durch eine unterschiedliche Nominalleistung unterscheiden wobei der nominale Strom der Leuchtmittel annähernd gleich ist.

Problematisch ist jedoch der Betrieb dieser Leuchtmittel im Notlichtbetrieb, in dem regulatorische Mindestanforderungen an die Helligkeit, bzw. die abgegebene Leistung (Lichtleistung), bestehen. Diese Anforderungen können nicht ohne Weiteres von einer Stromregelschleife erfüllt werden.

Gemäß solcher Normen (z.B. der DIN-Norm EN60598-2-22) ist z.B. für den Notlichtbetrieb im Allgemeinen vorgeschrieben, dass bei einem Wechsel der Umgebungstemperatur der notlichtfähigen Leuchte von beispielsweise 25°C auf 70°C die Lichtleistung sich beispielsweis um nicht mehr als einen bestimmten Prozentsatz, z.B. 50%, in beide Richtungen (also z.B. +/-50%) verändern darf.

DIN-Norm EN60598-2-22 stellt dabei genauer gesagt einen Standard für Notlichtleuchten dar, der spezifiziert, dass die Lichtleistung im Notlichtbetrieb bei 70°C nicht weniger als 50% der Lichtleistung dem Notlichtbetrieb bei 25°C betragen darf.

Diese Anforderungen sind insbesondere dann schwierig einzuhalten, wenn der Notlichtpegel, der also meist in Prozenten des Normalbetriebspegels ausgedrückt wird, am Betriebsgerät einstellbar ist, da bei einigen Notlichtpegeln die genannten Anforderungen hinsichtlich der Temperaturstabilität schwerer zu erfüllen sind als bei anderen.

Auch ist durch die Regelung zu kompensieren, dass die Lichtleistung des Leuchtmittels durch die vorgegebene Physik des Leuchtmittels, z.B. von der Lampenphysik einer Gasentladungslampe, temperaturabhängig ist. Zudem beeinflusst auch die U/I -Kennlinie des jeweiligen Leuchtmittels die Lichtleistung.

Im Normalbetrieb ist es wichtig, dass das Leuchtmittel ohne Flackererscheinungen möglichst konstant betrieben wird und eine Helligkeitsänderung für den Betrachter möglichst stufenlos erfolgt. Im Notlichtbetrieb, der einen Ausnahmefall darstellt, kommt es jedoch vor allem darauf an, dass die geforderte Helligkeit sichergestellt ist.

Aufgabe der Erfindung ist es somit, den Notlichtbetrieb von Betriebsgeräten für Leuchtmittel zu verbessern, welche Betriebsgeräte zumindest im Normalbetrieb eine Konstantstrom-Regelschleife verwenden. Diese Aufgabe wird durch das Betriebsgerät nach Anspruch 1, die Notlichtbeleuchtung nach Anspruch 8 und das Verfahren nach Anspruch 9 gelöst. Bevorzugte Ausführungsformen sind Gegenstände der Unteransprüche.

Es wird nunmehr beschrieben, dass eine Temperatur des Leuchtmittels direkt (z.B. mittels eines Temperatursensors) oder indirekt (beispielsweise über ermittelte elektrische Größen) erfasst wird. Ein die Temperatur wiedergebendes Temperatursignal wird dann der Steuerschaltung zugeführt. Der Temperatursensor kann dabei beispielsweise auch innerhalb einer Steuerschaltung, beispielsweise innerhalb eines ASICs, angeordnet sein.

Von den von dem Temperatursensor ermittelten Messwerten kann dann ggf. auch auf die Temperatur an dem Leuchtmittel geschlossen werden.

Es wird also ermöglicht, dass die Steuerschaltung abhängig von dem Temperatursignal die Lampenleistung, bzw. einen Dimmwert, unter Verwendung beispielsweise einer Lookup-Tabelle oder einer hinterlegten Funktion, derart steuert bzw. bestimmt, dass unabhängig von einer Temperaturdrift die Lichtleistung konstant, bzw. zumindest innerhalb des durch die entsprechenden Normen gesetzten Rahmens bleibt.

Während die Erfindung vorzugsweise eine Leuchte mit Betriebsgerät zum Betrieb einer Gasentladungslampe bzw. das Betriebsgerät zum Betrieb betrifft, können auch LED bzw. OLEDs als Leuchtmittel zum Einsatz kommen.

Dabei ist jedoch zu beachten, dass bei den letztgenannten Leuchtmitteln die Effizienz bei höheren Temperaturen an dem Leuchtmittel bzw. in seiner Umgebung sinkt.

Einem solchen Verhalten wird dadurch Rechnung getragen, dass es bei dem Abgleich, z.B. in der Lookup-Tabelle, oder bei Auswertung der hinterlegten Funktion, berücksichtigt wird. Somit können auch diese Effekte effektiv kompensiert werden.

Insbesondere wird abhängig von dem zurückgeführten Temperatursignal, beispielsweise über einen Abgleich mit der Lookup-Tabelle oder mittels der hinterlegten Funktion, der Sollwert für die Stromregelung verändert.

Gemäss einem Aspekt der Erfindung ist vorgesehen, dass ein Leuchtmittel im Normalbetrieb, d.h. bei Anliegen einer Netzspannung, mit einer Stromregelung betrieben bzw. über eine Stromregelschleife angesteuert wird. Schaltet das Betriebsgerät aufgrund eines Ereignisses in einen

Notlichtbetrieb, kann die Steuerschaltung von einer Stromregelschleife und einer Stromregelung auf eine Leistungsregelschleife zur Konstantregelung der Leuchtmittelleistung umschalten. Unter Stromregelung ist zu verstehen, dass ein den Leuchtmittelstrom wiedergebender Parameter erfasst und zurückgeführt wird, um mit einem Strom-Sollwert verglichen zu werden, um abhängig von einer derart ermittelten Regeldifferenz und einem Regelalgorithmus (der auch digital implementiert sein kann) eine den Leuchtmittelstrom beeinflussende Steuergrösse einzustellen.

Entsprechend ist unter Leistungsregelung zu verstehen, dass wenigstens ein die Leuchtmittelleistung wiedergebender Parameter erfasst, und zurückgeführt wird, um mit einem Leistungs-Sollwert verglichen zu werden, um abhängig von einer derart ermittelten Regeldifferenz und einem Regelalgorithmus (der auch digital implementiert sein kann) wenigstens eine die Leuchtmittelleistung beeinflussende Steuergrösse einzustellen.

Die Änderung der Regelschleife kann beispielsweise die Änderung. des dynamischen oder statischen Verhaltens der Regelschleife bedeuten, die Zuschaltung oder Wegschaltung eines Filtergliedes innerhalb der Regelschleife, das Zuschalten von zusätzlichen Sollwerten, eine Änderung des Regelalgorithmus (Leistungsregelung oder Stromregelung), die Veränderung eines Istwerts, Sollwerts und/oder einer Steuergrösse.

Ein Notlichtbetrieb kann beispielsweise durch eine analoge und/oder digital implementierte Steuereinheit (ASIC, Mikrokontroller, ...) in dem Betriebsgerät bei Wegfall einer Wechselstromversorgung (AC-Netzspannung) und Umschalten auf eine Gleichstromversorgung (DC-Spannung z.B. von einer Batterie) erkannt werden.

Ein Verfahren und eine Vorrichtung zur Erkennung eines Notlichtbetriebs und verschiedener Versorgungsspannungsarten ist in der deutschen Patentanmeldung DE 10 2010 063 992 beschrieben. Diese Erkennung kann auch bei der vorliegenden Erfindung Anwendung finden.

Als weiterer Stand der Technik ist die WO 2010/027460 A2 zu nennen, in der eine batteriebetriebene Beleuchtungsvorrichtung mit im Wesentlichen konstanter Lichtausgabe beschrieben ist.

Ferner kann der DE 10 2009 010 180 A1, welche eine Leuchtvorrichtung mit mindestens einer Halbleiterlichtquelle offenbart, und der DE 10 2010 003 797 A1, welche ein modulares LED-Beleuchtungssystem mit Notlichtfunktion offenbart, Stand der Technik entnommen werden.

Es ist jedoch zu verstehen, dass nicht nur ein Wegfall einer Versorgungsspannung, sondern bspw. auch der Wegfall einer angelegten Gleichspannung ermittelt und als Ereignis für den Eintritt eines Notlichtbetriebs ausgewertet werden kann.

Auch kann eine Wechselspannung über einen bestimmten Zeitraum wegfallen, so dass eine lokale Gleichstromversorgung (Batterie) die Versorgung des Betriebsgerätes übernimmt. Ein einen Notlichtbetrieb anzeigendes Ereignis kann jedoch auch durch andere Mittel (beispielsweise Rauchmelder, Lichtsensoren, Temperatursensoren, ...) ausgelöst werden.

### Kurze Beschreibung der Erfindung

Die Erfindung stellt eine Lösung für die oben dargestellten Probleme in Form von Vorrichtungen und Verfahren bereit, wie sie mit den unabhängigen Ansprüchen beansprucht werden. Insbesondere wird das Problem gelöst, die Lichtleistung im Notlichtbetrieb unabhängig von der Temperatursituation konstant zu halten.

Es wird ein Betriebsgerät für Leuchtmittel, wie bspw. Gasentladungslampen, LEDs oder OLEDs, beschrieben, mit: einer Steuerschaltung, die dazu ausgelegt ist, in einem Notlichtbetrieb wenigstens ein angeschlossenes Leuchtmittel mit konstant geregeltem Strom zu betreiben, wobei die Stromregelschleife ausgehend von einem die Temperatur des Leuchtmittels direkt oder indirekt erfassenden Sensors temperaturkompensiert ist.

Die Steuerschaltung kann dazu eingerichtet sein, basierend auf der erfassten Temperatur einen die Lichtleistung des Leuchtmittels beeinflussenden Ansteuerparameter zu verändern.

Die Steuerschaltung kann dazu eingerichtet sein, durch Regelung des Stroms die Lichtleistung des Leuchtmittels auf einem konstanten Wert zu halten.

Die Steuerschaltung kann dazu eingerichtet sein, einen Stromwert als Istwert zu ermitteln, wobei der Stromwert den durch das Leuchtmittel fließenden Strom wiedergibt.

Die Steuerschaltung kann eine Leistungsregelschleife zur Leistungsregelung und/oder eine Stromregelschleife zur Stromregelung des Leuchtmittels umfassen.

Die Steuerschaltung kann dazu ausgelegt sein, im Notlicht-Betrieb auf einen Betrieb des Leuchtmittels mit konstant geregelter Leistung umzuschalten.

Die Steuerschaltung kann dazu eingerichtet sein, den Ansteuerparameter basierend auf einem Abgleich der erfassten Temperatur mit einer hinterlegten Lookup-Tabelle und/oder einer hinterlegten Funktion zu verändern.

Das Betriebsgerät kann eine Notlicht -Erkennungsschaltung aufweisen, die dazu eingerichtet sein kann, den Notlichtbetrieb auf ein vorbestimmtes Ereignis hin zu erkennen.

Das zu erkennende Ereignis kann eine Spannungsunterbrechung und/oder ein Signal sein.

Das Signal kann ein Sensorsignal sein, z.B. von einem Rauchmelder, einem Lichtsensor, einem Temperatursensor.

Die hinterlegte Lookup-Tabelle und/oder die hinterlegte Funktion kann eine Veränderung der Effizienz des Leuchtmittels bei einer Veränderung der Temperatur an dem Leuchtmittel berücksichtigen.

In einem Aspekt stellt die Erfindung ein Betriebsgerät für Leuchtmittel, wie bspw. Gasentladungslampen, LEDs oder OLEDs, bereit, mit: einer Steuerschaltung, die dazu ausgelegt ist im Normalbetrieb, d.h. bei Versorgung des Betriebsgeräts mit einer AC-Netzspannung, wenigstens ein Leuchtmittel mit konstant geregeltem Strom zu betreiben, wobei die Steuerschaltung dazu ausgelegt ist, im Notlicht-Betrieb den Betrieb des Leuchtmittels auf einen Betrieb mit einer Leistungsregelung umzuschalten, wobei das Betriebsgerät eine Notlicht-Erkennungsschaltung aufweist, die dazu eingerichtet ist, den Notlichtbetrieb auf ein vorbestimmtes Ereignis hin zu erkennen, und wobei das zu erkennende Ereignis eine Spannungsunterbrechung und/oder ein Signal ist.

Die Steuerschaltung kann dazu eingerichtet sein, im Notlicht-Betrieb auf einen Betrieb des Leuchtmittels mit konstant geregelter Leistung umzuschalten Die Steuerschaltung kann dazu eingerichtet sein, einen Stromwert, einen Leistungswert und/oder einen Spannungswert als Istwert zu ermitteln, wobei der ermittelte Wert einen durch das Leuchtmittel fließenden Strom, eine an dem Leuchtmittel anliegende Spannung oder eine Leistung des Leuchtmittels wiedergeben kann.

In einem weiteren Aspekt stellt die Erfindung eine Notlichtbeleuchtung mit wenigstens einem Leuchtmittel und einem Betriebsgerät, wie vorstehend beschrieben, bereit.

Weiter wird ein Verfahren zum Betrieb wenigstens eines Leuchtmittels, wie bspw. Gasentladungslampen, LEDs oder OLEDs, beschrieben, wobei in einem Notlichtbetrieb des Leuchtmittels: das wenigstens eine Leuchtmittel mittels einer Stromregelschleife mit konstant geregeltem Strom betrieben wird, die Temperatur des Leuchtmittels direkt oder indirekt erfasst wird, und die Stromregelschleife ausgehend von der erfassten Temperaturtemperaturkompensiert wird, bspw. durch Veränderung des Istwerts, Sollwerts und/oder der Steuergrösse der Stromregelschleife.

Weiter stellt die Erfindung ein Verfahren zum Betrieb wenigstens eines Leuchtmittels, wie bspw. Gasentladungslampen, LEDs oder OLEDs, bereit, wobei eine Steuerschaltung in einem Normalbetrieb, d.h. bei Versorgung mit einer AC-Netzspannung, das wenigstens eine Leuchtmittel mit konstant geregeltem Strom betreibt, und wobei die Steuerschaltung im Notlicht-Betrieb vorzugsweise auf einen Betrieb des Leuchtmittels mit konstant geregelter Leistung umschaltet.

In einem noch weiteren Aspekt stellt die Erfindung ein Verfahren zum Betrieb wenigstens eines Leuchtmittels, wie bspw. Gasentladungslampen, LEDs oder OLEDs bereit wobei eine Steuerschaltung in einem Normalbetrieb, d.h. bei Versorgung mit einer AC-Netzspannung, das wenigstens eine Leuchtmittel mit vorzugsweise konstant geregeltem Strom betreibt, und die Steuerschaltung im Notlicht-Betrieb den Betrieb des Leuchtmittels auf einen Betrieb mit einer Leistungsregelung umschaltet, wobei eine Notlicht-Erkennungsschaltung den Notlichtbetrieb auf ein vorbestimmtes Ereignis hin erkennt, und wobei das zu erkennende Ereignis eine Spannungsunterbrechung und/oder ein Signal ist. Bspw. kann die Regelschleife durch Zuschalten von zusätzlichen Sollwerten, durch Änderung des Regelalgorithmus, Veränderung des Istwerts, Sollwerts und/oder der Steuergrösse umgeschaltet werden.

Ferner wird eine Integrierte Steuerschaltung, bspw. ASIC oder Mikrokontroller, beschrieben, die vorzugsweise digital ein Verfahren implementiert, wie es vorstehend beschrieben ist.

Weitere Aspekte der Erfindung werden mit Blick auf die Zeichnungen im Folgenden beschrieben.

### Kurze Beschreibung der Zeichnungen

- Fig. 1: zeigt in einem U/I-Diagramm die Abhängigkeit einer Leuchtmittel-Spannung von einem Leuchtmittel-Strom für verschiedene Temperaturen.
- Fig. 2: zeigt eine Lichtleistung eines Leuchtmittels in Abhängigkeit der Temperatur bei konstanter Lampenleistung.
- Fig. 3: zeigt eine erfindungsgemäße Schaltungsanordnungen zur Stromregelung eines Leuchtmittels.
- Fig. 4: zeigt eine Schaltungsanordnungen zur Leistungsregelung.
- Fig. 5: zeigt eine erfindungsgemäße Schaltungsanordnungen zur kombinierten Strom- und Leistungsregelung eines Leuchtmittels.

### Detaillierte Beschreibung

Es ist bekannt, dass Betriebsgeräte für Leuchtmittel, beispielsweise Vorschaltgeräte für Gasentladungslampen, einen Notlichtbetrieb, beispielsweise bei Erkennen des Anliegens einer Gleichspannung, erlauben, in dem das Leuchtmittel ausgehend von einer alternativen Spannungsversorgung, und nicht mehr durch eine AC-Netzspannung betrieben wird.

Wie oben bereits beschrieben, ist im Notlichtbetrieb eine bestimmte Lichtleistung mit Mindest-Temperaturrobustheit sicherzustellen. Beispielsweise können dimmbare Betriebsgeräte die Lichtleistung auf einen vorbestimmten Wert ändern, wenn eine Gleichspannung erkannt wird. Dabei wird dann die Dimmfunktionalität deaktiviert.

Einige Leuchtmittel weisen auch eine verringerte Effizienz bei höheren Temperaturen auf, die auch die Lichtleistung verringern.

Die beschriebene Lösung erlaubt es daher eine Temperatur an dem Leuchtmittel, bzw. an dem Betriebsgerät/ der Leuchte, zu ermitteln und die Lichtleistung des Leuchtmittels basierend auf der zurückgeführten Temperatur und einer hinterlegten Information zu regeln. Die Regelung erfolgt dabei so, dass die Lichtleistung des Leuchtmittels im Wesentlichen konstant ist.

Die hinterlegte Information kann beispielsweise eine hinterlegte Tabelle, z.B. eine- Lookup-Tabelle, oder eine hinterlegte Funktion sein. Die Regelung erfolgt dann durch Abgleich der ermittelten Temperatur mit der Tabelle, bzw. durch entsprechende Auswertung der Funktion.

Im Gegensatz zu den bekannten Vorrichtungen und Verfahren hält die Erfindung die Lichtleistung während des Notlichtbetriebs auf einem konstanten Niveau.

Dabei ist insbesondere bei niedrigeren Dimmwerten im Notlichtbetrieb eine Regelung des Lichts nach oben notwendig.

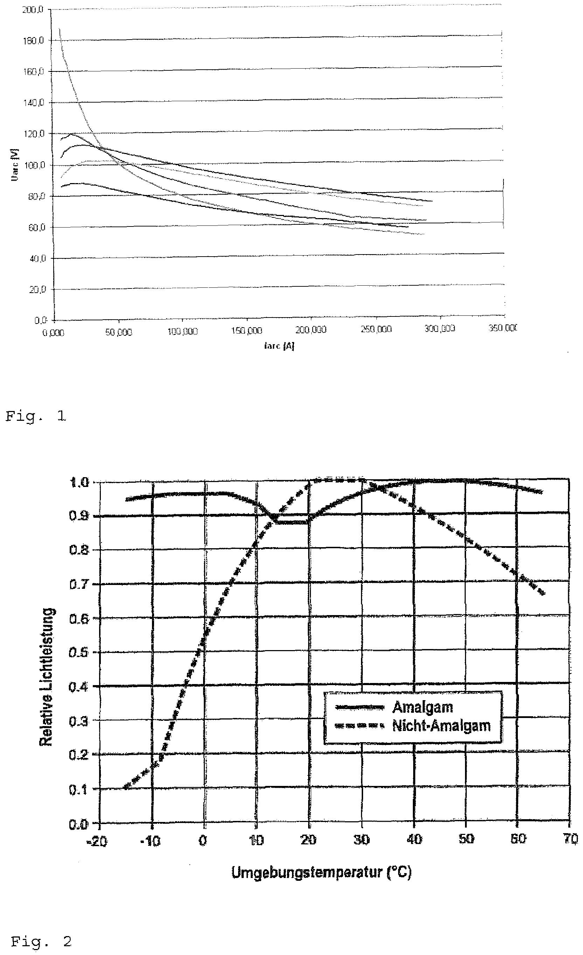

Fig.1 zeigt z.B. in einem U/I-Diagramm einer Gasentladungslampe Lampenspannungen (U_{ARC}) in Abhängigkeit vom Lampenstrom (I_{ARC}). Verschiedene U/I Kurven/Lampenspannungsverläufe sind hier für verschiede Umgebungstemperaturen dargestellt.

Die Lampenspannung ist bei 60°C (untere schwarze Linie) wesentlich geringer als die Lampenspannung bei 25°C (dritte Linie von unten). Deshalb ist auch die Lampenleistung bei einem konstanten Lampenstrom wesentlich geringer. Dies führt zu einer reduzierten Lichtleistung.

In dem gezeigten Beispiel ist die Lampenspannung bei 60°C ungefähr 20% geringer als die Lampenspannung bei 25°C, was in 20% weniger Lampenleistung resultiert. Weiter ist die Lampeneffizienz bei höheren Temperaturen geringer, so dass die Lichtleistung sogar um mehr als 20% reduziert ist.

Andere Leuchtmittel weisen eine wesentlich stärkere Temperaturabhängigkeit ihrer Lichtleistung auf, so dass die Lichtleistung schnell um mehr als 50% bei relativ geringem Temperaturanstieg abfallen kann.

Zusätzlich zu der Abhängigkeit der Lampenleistung von der Temperatur ist auch die Lichtleistung von der Temperatur abhängig, wenn die Leistung des Leuchtmittels konstant ist. Dies ist beispielhaft in Fig. 2 gezeigt.

Das Diagramm aus Fig. 2 zeigt eine Lichtleistung als Funktion der Temperatur bei konstanter Lampenleistung. Die Lichtleistung der Lampe verringert sich dabei um 40% bei einer Erhöhung der Temperatur von 25°C auf 70°C (siehe gestrichelte Linie für eine Nicht-Amalgamlampe). Amalgamlampen sind zwar für einen größeren Temperaturbereich ausgelegt und verhalten sich daher besser, dennoch ist ein Absinken der Lichtleistung bei hohen Temperaturen auch bei einer Amalgamlampe zu erkennen (siehe durchgezogene Linie).

Die Erfindung kompensiert nun den Lichtleistungsverlust aufgrund einer verringerten Lampenspannung und einer verringerten Lampeneffizienz.

Während eine Möglichkeit zur Kompensation in der Veränderung der Dimmwerte im Notlichtbetrieb abhängig von einer ermittelten Temperatur besteht, ist beim Übergang in den Notlichtbetrieb auch ein Wechsel einer Strom- auf eine Leistungsregelung möglich. Hierdurch wird die Abhängigkeit der Leistung des Leuchtmittels (Lampenleistung) von der Temperatur eliminiert. Die Abhängigkeit der Lichtleistung von der Temperatur besteht jedoch immer noch. Dementsprechend kann der Wechsel auf die Leistungsregelung auch mit der Temperaturerfassung kombiniert werden.

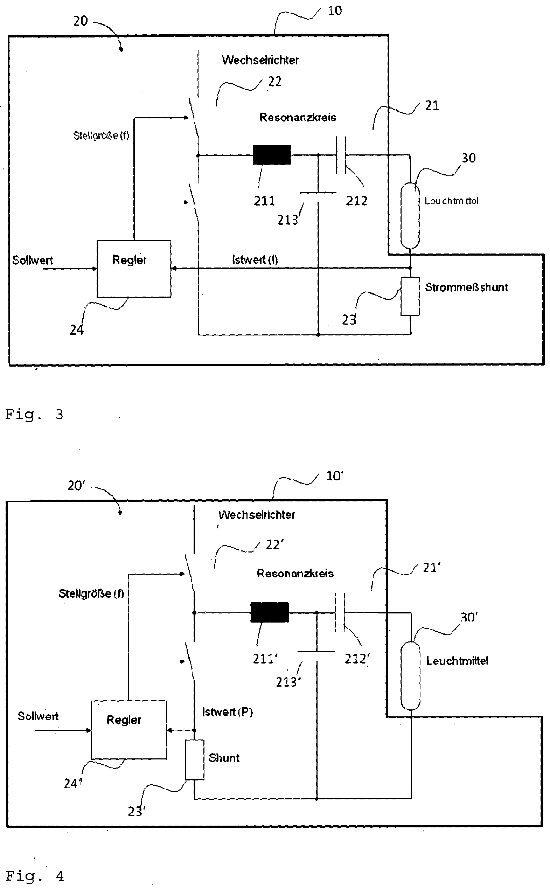

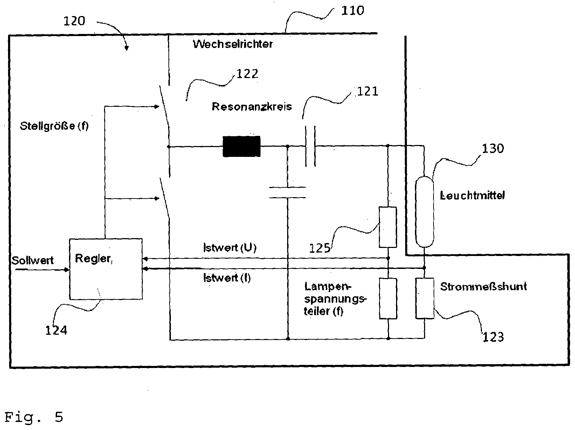

Die Figs. 3-5 zeigen Schaltungsanordnungen zur erfindungsgemäßen Stromregelung (Fig. 3), zur Leistungsregelung (Fig. 4) und zu einer erfindungsgemäßen kombinierten Strom- und Leistungsregelung (Fig. 5). Diese Schaltungsanordnungen stellen nur beispielhaft eine mögliche Ausführung der Steuerschaltung dar. Es handelt sich bei der Steuerschaltung grundsätzlich um eine aktiv getaktete Schaltreglerschaltung, wobei deren Taktung durch eine geschlossene Regelschleife beeinflusst wird.

Fig. 3 zeigt eine beispielhafte Anordnung für eine Stromregelung gemäß der Erfindung. Dabei ist in einem Betriebsgerät 10 eine Steuerschaltung 20 zur Ansteuerung eines Leuchtmittels 30 vorgesehen.

Das Leuchtmittel 30 ist in der Anordnung über einen Resonanzkreis 21, bestehend aus einer Induktivität 211, einem ersten Kondensator 212 und einem zweiten Kondensator 213, einerseits und über einen Strommeßshunt 23 andererseits mit einem Wechselrichter 22 verbunden.

Dabei ist die Induktivität 211 mit dem Mittenpunk des Wechselrichters 22 und dem ersten Kondensator 212 verbunden. Die Induktivität 211, der erste Kondensator 212, das Leuchtmittel 30 und der Strommeßshunt 23 sind in Reihe angeordnet, während der zweite Kondensator 213 parallel zu dem ersten Kondensator 212, des Leuchtmittel 30 und dem Strommeßshunt 23 geschaltet ist. Der zweite Kondensator ist einerseits mit einem Abgriffspunkt zwischen der Induktivität 211 und dem ersten Kondensator 212 und andererseits mit der Seite der Strommeßshunts (Widerstand) 23 verbunden, die dem Leuchtmittel 30 abgewandt ist.

Im dargestellten Beispiel weist die Steuerschaltung 20 einen Regler 24 auf, der in dem Beispiel als Stromregelkreis ausgebildet ist. An einem Abgriff zwischen Leuchtmittel 30 und der dem Leuchtmittel 30 zugewandten Seite des Strommeßshunts ermittelt der Regler 24 einen Istwert I für den Strom durch das Leuchtmittel 30. Die Steuerschaltung 20 ist also dazu eingerichtet, einen Stromwert als Istwert zu ermitteln, wobei der Stromwert den durch das Leuchtmittel fließenden Strom wiedergibt.

Dem Regler wird zudem ein Sollwert zugeführt. Über einen Abgleich von Ist- und Sollwert ermittelt der Regler 24 dann eine Stellgröße f zum Ansteuern des Wechselrichters 22 und damit der Leuchtmittel 30.

Dabei kann der Regler 24 ebenfalls eine ermittelte Temperatur, bzw. einen Temperaturparameter, auswerten. Diese Auswertung kann kompensierend an verschiedenen Stellen der Regelschleife verwendet werden, bspw. können der Istwert, der Sollwert und/oder die Stellgrösse entsprechend temperaturkompensiert werden.

Gemäss einem Beispiel erfolgt eine Temperaturkompensation der Stellgröße f auf einen Abgleich der Temperatur mit einer hinterlegten Lookup-Tabelle, bzw. durch Auswertung einer hinterlegten Funktion, um die Lichtleistung des Leuchtmittels anzupassen und so den Einfluss der Temperatur/einer Temperaturänderung zu kompensieren.

Da es sich bei dem Regler in dem Beispiel nach Fig. 3 um eine Stromregelungsschaltung handelt, ist der Sollwert vorzugsweise als Sollwert für den Strom durch das Leuchtmittel 30 vorgegeben. Die Steuerschaltung 20 ist dazu eingerichtet, durch Regelung des Stroms die Lichtleistung des Leuchtmittels auf einem konstanten Wert zu halten.

Fig. 4 zeigt beispielhaft ein Betriebsgerät 10', an das ein Leuchtmittel 30' angeschlossen ist, mit einer Steuerschaltung 20'. Das Leuchtmittel 30' ist wiederum (wie bereits für Fig. 3 beschrieben) über einen Resonanzkreis 21' und einen Shunt 23' mit einem Wechselrichter 22' verbunden. Der Resonanzkreis 21' entspricht dabei dem Resonanzkreis 21. Die Elemente des Resonanzkreises 21' sind nachfolgend als Induktivität 211', erster Kondensator 212' und dritter Kondensator 213' bezeichnet.

Wiederum ist die Induktivität 211', die mit dem Mittenpunkt des Wechselrichters verbunden ist, der erste Kondensator 212', das Leuchtmittel 30' und der Shunt 23' in Reihe angeordnet. Der zweite Kondensator 213' ist wieder mit einem Abgriffspunkt zwischen der Induktivität 211' und dem ersten Kondensator 212' verbunden. Die andere Seite des zweiten Kondensators 213' ist jedoch nunmehr mit einem Abgriffspunkt zwischen dem Leuchtmittel 30' und dem Shunt (Widerstand) 23' verbunden, d.h. zwischen der dem Leuchtmittel 30 zugewandten Seite des Shunts 23' und dem Leuchtmittel 30.

Wiederum ist in der Steuerschaltung 20' ein Regler 24' vorgesehen. In Fig. 4 ist jedoch anders als in Fig. 3 ein Leistungsregelkreis vorgesehen, der an der dem Leuchtmittel 30' abgewandten Seite des Shunts 23' einen Leistungswert als Istwert P ermittelt und diesen mit einem Sollwert für die Lampenleistung vergleicht. Anhand dieses Vergleichs wird dann die Stellgröße für den Betrieb des Wechselrichters 22' eingestellt.

Fig. 5 zeigt eine weitere Ausführungsform für ein erfindungsgemäßes Betriebsgerät 110 anhand einer beispielhaften Anordnung.

Insbesondere erlaubt die Schaltung gemäß Fig. 5 sowohl eine Leistungsregelung, als auch eine Stromregelung. Die Schaltung entspricht weitgehend der Schaltung aus Fig. 3 und weist somit ein Leuchtmittel 130, einen Strommeßshunt 123, einen Resonanzkreis 121, einen Wechselrichter 122 und einen Regler 124 auf. Der Regler 124 bestimmt wieder, wie bereits für Fig. 3 beschrieben, einen Istwert I für den Lampenstrom an einem Abgriffspunkt zwischen dem Leuchtmittel 130 und dem Strommeßshunt 123.

Der Aufbau des Resonanzkreises 121 entspricht dem des Resonanzkreises 21 aus Fig. 3.

Die Steuerschaltung 120 ist gegenüber der Steuerschaltung 20 aus Fig. 3 dahingehend geändert, dass parallel zu dem Leuchtmittel und zu dem Strommeßshunt ein Spannungsteiler 125 angeordnet ist, an dessen Mittenpunkt von dem Regler 124 zusätzlich ein Istwert U für die Lampenspannung ermittelt werden kann. In dem in Fig. 5 dargestellten Ausführungsbeispiel ist der Regler 124 der Steuerschaltung 120 daher so ausgelegt, dass er sowohl einen Stromregelkreis als auch einen Leistungsregelkreis aufweist.

So ist es möglich, die Betriebsweise des Reglers 124 abhängig von einem Ereignis so zu ändern, dass beispielsweise entweder eine Stromregelung des Lampenstroms über den Stromregelkreis, oder alternativ eine Leistungsregelung der Lampenleistung über die Leistungsregelschleife erfolgen kann. So ist es beispielsweise möglich, das Leuchtmittel 130 in einer Betriebsart stromgeregelt und in einer anderen Betriebsart leistungsgeregelt zu betreiben. Im Notlicht-Betrieb kann die Steuerschaltung also den Betrieb des Leuchtmittels auf einen Betrieb mit geänderter Regelschleife umschalten. Dieses Umschalten der Regelschleife kann beispielsweise auch durch Zuschalten von zusätzlichen Sollwerten, durch Änderung des Regelalgorithmus, Veränderung des Istwerts, Sollwerts und/oder der Steuergrösse erfolgen. Die Änderung der Regelschleife kann beispielsweise auch eine Änderung des dynamischen oder statischen Verhaltens der Regelschleife bedeuten. Beispielsweise kann eine Zuschaltung oder Wegschaltung eines Filtergliedes innerhalb der Regelschleife erfolgen.

So wäre es möglich, dass im Notlichtbetrieb ein Filter innerhalb der Regelschleife weggeschaltet oder überbrückt wird und somit die Regelschleife ein schnelleres Antwortverhalten als im Normalbetrieb hat.

Ein Einsatzgebiet für die erfindungsgemäßen Ausführungsformen sind z. B. Notlichtgeräte, die normgerechte Betriebsweisen, wie sie oben beschrieben wurden, erlauben müssen. Die Ausführungsform nach Fig. 5 hat dabei den Vorteil, dass beispielsweise bei Erkennen eines Notlichtbetriebs von der Stromregelung auf die Leistungsregelung umgestellt werden kann, oder umgekehrt.

Ein Notlichtbetrieb kann dabei beispielsweise durch den Wegfall einer Versorgungsspannung oder eine Unterbrechung der Versorgungsspannung für einen gewissen Zeitraum ausgelöst werden. Auch ein Wechsel von einer AC-Versorgung zu einem Gleichstrombetrieb (DC-Betrieb), bzw. Batteriebetrieb, kann einen Notlichtbetrieb anzeigen.

Es ist gemäß der Erfindung und in dem Ausführungsbeispiel von Fig. 5 möglich, die Stellgröße entsprechend eines ermittelten Temperaturparameters einzustellen, der die Temperatur an dem Leuchtmittel (z.B. Gasentladungslampe, LED, OLED) wiedergibt. Dieser Temperaturparameter kann beispielweise über einen Temperatursensor an dem Leuchtmittel, an der Steuerschaltung/dem Betriebsgerät, oder auf Basis einer Messung von elektrischen Parametern ermittelt werden.

In der Steuerschaltung kann dann wie bereits beschrieben eine Lookup-Tabelle oder eine Funktion hinterlegt sein, die es erlaubt, auf einen Vergleich/eine Auswertung des Temperaturparameters mit Informationen aus der Tabelle/Funktionswerten einen Sollwert für die Stromregelung, bzw. die Leistungsregelung, zu ermitteln.

Ein Notlichtbetrieb kann dabei beispielsweise mit einer Schaltung erkannt werden, wie sie aus der deutschen Patentanmeldung DE 10 2010 063 992.3 bekannt ist.

Gemäss dieser Druckschrift wird ein Vorschaltgerät mit separaten Messkreisen beschrieben, das eingesetzt wird, um eine von einem Gleichrichtungsmittel gleichgerichtete Spannung in eine positive und eine negative Spannungskomponente zu zerlegen, wobei die Spannung, z. B. als Wechselspannung, als pulsierende Gleichspannung, oder als konstante Gleichspannung vorliegen kann. Einer Auswerteschaltung werden die Spannungskomponenten der beiden Strommesskreise zur Identifizierung der Art der anliegenden Spannung zugeführt. Eine Analyseschaltung analysiert die Spannungskomponenten und weitere Merkmale der Spannung.

Anhand dieser Analyse kann beispielsweise ebenfalls die Erkennung einer Änderung in der Betriebsweise erkannt werden und somit beispielsweise auch ein Ereignis, das einen Notlichtbetrieb auslösen kann.

## Patentansprüche

1. Betriebsgerät (10; 10'; 110) für Leuchtmittel, wie bspw. Gasentladungslampen, LEDs oder OLEDs, mit: - einer Steuerschaltung (20; 20'; 120), die dazu ausgelegt ist, im Normalbetrieb, d.h. bei Versorgung des Betriebsgeräts mit einer AC-Netzspannung, wenigstens ein Leuchtmittel (30; 30'; 130) mit konstant geregeltem Strom zu betreiben,
- wobei das Betriebsgerät eine Notlicht-Erkennungsschaltung aufweist, die dazu eingerichtet ist, einen Notlichtbetrieb auf ein vorbestimmtes Ereignis hin zu erkennen, und
- wobei das zu erkennende Ereignis eine Spannungsunterbrechung und/oder ein Signal ist, **dadurch gekennzeichnet, dass** die Steuerschaltung dazu ausgelegt ist, im Notlicht-Betrieb den Betrieb des Leuchtmittels auf einen Betrieb mit einer Leistungsregelung umzuschalten.

2. Betriebsgerät nach Anspruch 1, wobei die Steuerschaltung dazu eingerichtet ist, im Notlicht-Betrieb auf einen Betrieb des Leuchtmittels mit konstant geregelter Leistung umzuschalten.

3. Betriebsgerät nach Anspruch 1, wobei die Steuerschaltung dazu eingerichtet ist, im Notlicht-Betrieb die Umschaltung durch eine Änderung des dynamischen oder statischen Verhaltens der Regelschleife zu bewirken.

4. Betriebsgerät nach Anspruch 1, wobei die Steuerschaltung dazu eingerichtet ist, im Notlicht-Betrieb vorzugsweise basierend auf einer erfassten Temperatur einen die Lichtleistung des Leuchtmittels beeinflussenden Ansteuerparameter zu verändern.

5. Betriebsgerät nach einem der Ansprüche 1 bis 4, wobei die Steuerschaltung dazu eingerichtet ist, durch Regelung des Stroms die Lichtleistung des Leuchtmittels auf einem konstanten Wert zu halten.

6. Betriebsgerät nach einem der Ansprüche 1 bis 5, wobei die Steuerschaltung dazu eingerichtet ist, einen Stromwert, einen Leistungswert und/oder einen Spannungswert als Istwert zu ermitteln, wobei der ermittelte Wert einen durch das Leuchtmittel fließenden Strom, eine an dem Leuchtmittel anliegende Spannung oder eine Leistung des Leuchtmittels wiedergibt.

7. Betriebsgerät nach einem der Ansprüche 1 bis 6, wobei die Steuerschaltung eine Leistungsregelschleife zur Leistungsregelung und/oder eine Stromregelschleife zur Stromregelung des Leuchtmittels des Leuchtmittels umfasst.

8. Notlichtbeleuchtung mit wenigstens einem Leuchtmittel und einem Betriebsgerät nach einem der Ansprüche 1 bis 7.

9. Verfahren zum Betrieb wenigstens eines Leuchtmittels, wie bspw. Gasentladungslampen, LEDs oder OLEDs, wobei:
- eine Steuerschaltung (20; 20'; 120) in einem Normalbetrieb, d.h. bei Versorgung mit einer AC-Netzspannung, das wenigstens eine Leuchtmittel (30; 30'; 130) mit konstant geregeltem Strom betreibt,
- wobei eine Notlicht-Erkennungsschaltung einen Notlichtbetrieb auf ein vorbestimmtes Ereignis hin erkennt, und
- wobei das zu erkennende Ereignis eine Spannungsunterbrechung und/oder ein Signal ist, **dadurch gekennzeichnet, dass** die Steuerschaltung im Notlicht-Betrieb den Betrieb des Leuchtmittels auf einen Betrieb mit einer Leistungsregelung umschaltet.

10. Verfahren nach Anspruch 9, wobei die Steuerschaltung im Notlicht-Betrieb auf einen Betrieb des Leuchtmittels mit konstant geregelter Leistung umschaltet.

## Claims

1. An operating device (10; 10'; 110) for luminous means, such as, for example, gas discharge lamps, LEDs or OLEDs, having:
- a control circuit (20; 20'; 120), which is designed to operate at least one luminous means (30; 30'; 130) with a constantly regulated current in the normal mode, i.e., when the operating device is supplied with an AC voltage,
- wherein the operating device has an emergency lighting-detection circuit, which is set up to detect an emergency lighting mode at a predetermined event, and
- wherein the event to be detected is a voltage interruption and/or a signal, **characterized in that** the control circuit is designed in the emergency lighting mode to switch the mode of the luminous means over to a mode with a power output control.

2. An operating device according to Claim 1, wherein the control circuit is set up to switch over in the emergency lighting mode to a mode of the luminous means with constantly regulated power output.

3. An operating device according to Claim 1, wherein the control circuit is set up to effect a switchover in the emergency lighting mode through a change of the dynamic or static behavior of the control loop.

4. An operating device according to Claim 1, wherein the control circuit is set up to change a control parameter influencing the light output of the luminous means in the emergency lighting mode preferably based on a detected temperature.

5. An operating device according to any one of Claims 1 to 4, wherein the control circuit is set up to keep the light output of the luminous means at a constant value by controlling the current.

6. An operating device according to any one of Claims 1 to 5, wherein the control circuit is set up to determine a current value, a power output value and/or a voltage value as an actual value, wherein the determined value reflects a current flowing through the luminous means, a voltage applied to the luminous means or a power output of the luminous means.

7. An operating device according to any one of Claims 1 to 6, wherein the control circuit comprises a power control loop for power control and/or a current control loop for current control of the luminous means of the luminous means.

8. An emergency lighting illumination having at least one luminous means and an operating device according to any one of Claims 1 to 7.

9. A method for the operation of at least one luminous means, such as, for example, gas discharge lamps, LEDs or OLEDs, wherein:
- a control circuit (20; 20'; 120) in a normal mode, i.e. when supplied with an AC voltage operates the at least one luminous means (30; 30'; 130) with constantly regulated current,
- wherein an emergency lighting-detection circuit detects an emergency lighting mode at a predetermined event, and
- wherein the event to be detected is a voltage interruption and/or a signal,
**characterized in that** the control circuit in the emergency lighting mode switches the mode of the luminous means over to a mode with a power output control.

10. A method according to Claim 9, wherein the control circuit in the emergency lighting mode switches over to a mode of the luminous means with constantly regulated power output.

## Revendications

1. Appareil d'exploitation (10 ; 10' ; 110) pour des moyens d'éclairage, par exemple des lampes à décharge de gaz, des LED ou des OLED, avec :
- un circuit de commande (20 ; 20' ; 120), qui est conçu pour exploiter, en mode normal, c'est-à-dire lors de l'alimentation de l'appareil d'exploitation avec une tension de secteur AC, au moins un moyen d'éclairage (30 ; 30' ; 130) avec un courant régulé constamment,
- l'appareil d'exploitation comprenant un circuit de détection d'éclairage de secours qui est conçu pour détecter un événement prédéterminé dans un mode d'éclairage de secours et
- l'événement à détecter est une interruption de tension et/ou un signal, **caractérisé en ce que** le circuit de commande est conçu pour faire passer, en mode d'éclairage de secours, le fonctionnement du moyen d'éclairage à un fonctionnement avec une régulation de puissance.

2. Appareil d'exploitation selon la revendication 1, le circuit de commande étant conçu pour passer, en mode d'éclairage de secours, à un fonctionnement du moyen d'éclairage avec une puissance régulée constamment.

3. Appareil d'exploitation selon la revendication 1, le circuit de commande étant conçu pour provoquer, en mode d'éclairage de secours, le passage ou une modification du comportement dynamique ou statique de la boucle de régulation.

4. Appareil d'exploitation selon la revendication 1, le circuit de commande étant conçu pour modifier, en mode d'éclairage de secours, de préférence sur la base d'une température mesurée, un paramètre de pilotage influençant la puissance du moyen d'éclairage.

5. Appareil d'exploitation selon l'une des revendications 1 à 4, le circuit de commande étant conçu pour maintenir la puissance du moyen d'éclairage à une valeur constante par régulation du courant.

6. Appareil d'exploitation selon l'une des revendications 1 à 5, le circuit de commande étant conçu pour déterminer une valeur de courant, une valeur de puissance et/ou une valeur de tension en tant que valeur réelle, la valeur déterminée reflétant un courant s'écoulant à travers le moyen d'éclairage, une tension appliquée au moyen d'éclairage ou une puissance du moyen d'éclairage.

7. Appareil d'exploitation selon l'une des revendications 1 à 6, le circuit de commande comprenant une boucle de régulation de puissance pour la régulation de la puissance et/ou une boucle de régulation de courant pour la régulation du courant du moyen d'éclairage.

8. Éclairage de secours avec au moins un moyen d'éclairage et un appareil d'exploitation selon l'une des revendications 1 à 7.

9. Procédé d'exploitation d'au moins un moyen d'éclairage, par exemple des lampes à décharge de gaz, des LED ou des OLED, moyennant quoi :
- un circuit de commande (20 ; 20' ; 120) exploite, en mode normal, c'est-à-dire lors d'une alimentation avec une tension de secteur AC, l'au moins un moyen d'éclairage (30 ; 30' ; 130) avec un courant régulé constamment,
- un circuit de détection d'éclairage de secours détectant événement prédéterminé dans un mode d'éclairage de secours et
- l'événement à détecter est une interruption de tension et/ou un signal, **caractérisé en ce que** le circuit de commande fait passer, en mode d'éclairage de secours, le fonctionnement du moyen d'éclairage à un fonctionnement avec une régulation de puissance.

10. Procédé selon la revendication 9, le circuit de commande passant, en mode d'éclairage de secours, à un fonctionnement du moyen d'éclairage avec une puissance régulée constamment.
